# EUROPÄISCHE PATENTSCHRIFT

(11) **EP 0 938 820 B1**
(45) Veröffentlichungstag und Bekanntmachung des Hinweises auf die Patenterteilung: **12.06.2002**
(21) Anmeldenummer: 97948719.6
(22) Anmeldetag: 06.11.1997
(51) Int. Cl.: H04Q 7/22, H04Q 7/38, H04B 7/26

(54) **VERFAHREN UND BASISSTATIONSYSTEM ZUR KONFIGURIERUNG EINER FUNKSCHNITTSTELLE ZWISCHEN EINER MOBILSTATION UND EINER BASISSTATION EINES ZEITMULTIPLEX-MOBILFUNKSYSTEMS FÜR EINE PAKETDATENÜBERTRAGUNG**
PROCESS AND BASE STATION SYSTEM FOR CONFIGURING AN AIR INTERFACE BETWEEN A MOBILE STATION AND A BASE STATION IN A TIME-DIVISION MULTIPLEX MOBILE RADIO TELEPHONE SYSTEM FOR PACKET DATA TRANSMISSION
PROCEDE ET SYSTEME DE STATION DE BASE POUR LA CONFIGURATION D'UNE INTERFACE RADIO ENTRE UNE STATION MOBILE ET UNE STATION DE BASE D'UN SYSTEME RADIOTELEPHONIQUE MOBILE A MULTIPLEXAGE DANS LE TEMPS POUR UNE TRANSMISSION DE DONNEES PAR PAQUETS

(30) Priorität: 18.11.1996 DE 19647629; 16.12.1996 DE 19652303
(43) Veröffentlichungstag der Anmeldung: 01.09.1999
(73) Patentinhaber: Siemens Aktiengesellschaft, 80506 München (DE)
(72) Erfinder: MENZEL, Christian, D-82216 Maisach (DE); ÖTTL, Martin, D-82362 Weilheim (DE)
(86) Internationale Anmeldenummer: DE9702581
(87) Internationale Veröffentlichungsnummer: WO9823104

(56) Entgegenhaltungen:
- EP-A- 0 681 406
- DECKER P: "A PACKET RADIO PROTOCOL FOR GROUP COMMUNICATION SUITABLE FOR THE GSM MOBILE RADIO NETWORK" IEEE INTERNATIONAL SYMPOSIUM ON PERSONAL, INDOOR AND MOBILE RADIO COMMUNICATIONS, 1994, Seiten 934-938, XP000197665

## Beschreibung

Zur Übertragung von Daten zwischen zwei Kommunikationsendgeräten kann auf verbindungsorientierte Konzepte und Konzepte auf der Basis logischer Verbindungen zurückgegriffen werden. Bei verbindungsorientierten Datenübertragungen müssen während der gesamten Zeit der Datenübertragung physikalische Ressourcen zwischen den zwei Kommunikationsendgeräten bereitgestellt werden.

Bei der Datenübertragung über logische Verbindungen ist eine dauerhafte Bereitstellung von physikalischen Ressourcen nicht nötig. Ein Beispiel für eine solche Datenübertragung ist die Paketdatenübertragung. Hier besteht während der Dauer der gesamten Datenübertragung eine logische Verbindung zwischen den zwei Kommunikationsendgeräten, jedoch werden physikalische Ressourcen nur während der eigentlichen Übertragungszeiten der Datenpakete bereitgestellt. Dieses Verfahren basiert darauf, daß die Daten in kurzen Datenpaketen, zwischen denen längere Pausen auftreten können, übermittelt werden. In den Pausen zwischen den Datenpaketen sind die physikalischen Ressourcen für andere logische Verbindungen verfügbar. Bezogen auf eine logische Verbindung werden physikalische Ressourcen eingespart.

Das aus den Dokumenten DE 44 02 930 A1 und EP 0 681 406 A1 bekannte Paketdatenübertragungsverfahren bietet sich insbesondere für Kommunikationssysteme mit begrenzten physikalischen Ressourcen an. Beispielsweise in Mobilfunksystemen, wie dem GSM-Mobilfunksystem (Global System for Mobile Communications), sind die physikalischen Ressourcen im Frequenzbereich - Anzahl der Frequenzkanäle und Zeitschlitz - beschränkt und müssen rationell genützt werden.

Das GSM-Mobilfunksystem ist ein Beispiel für ein Zeitmultiplex-Mobilfunksystem, wobei Zeitschlitze innerhalb eines Frequenzkanals auf verschiedene Kommunikationsendgeräte aufgeteilt werden können. Die netzseitige Funkstation eines Mobilfunknetzes ist eine Basisstation, die über eine Funkschnittstelle mit Mobilstationen kommuniziert. Die Übertragung von einer Mobilstation zur Basisstation wird als Aufwärtsrichtung, die Übertragung von der Basisstation zu einer Mobilstation als Abwärtsrichtung bezeichnet. Ein Kanal, der für die Paketdatenübertragung reserviert ist, wird durch zumindest einen Zeitschlitz pro Zeitmultiplexrahmen gebildet. Weiterhin bezeichnen die Trägerfrequenz und evtentuell eine Frequenzsprungsequenz den Kanal.

Das GSM-Mobilfunksystem wurde ursprünglich zur Übertragung von Sprache konzipiert, wobei ein Kanal für die ständige Informationsübertragung zwischen Mobilstation und Basisstation reserviert wurde. Bei der Paketdatenübertragung wird jedoch ein gemeinsamer Kanal zur Paketdatenübertragung für mehrere Mobilstationen genutzt. Zusätzlich zu den Paketdaten werden auch Signalisierungsinformationen übertragen, für die in zyklischen Abständen ein Zeitschlitz innerhalb des Kanals vorgesehen ist.

Die Unterscheidung in logische und physikalische Verbindungen bringt es mit sich, daß für eine Mobilstation zwar eine logische Verbindung existiert, doch über eine gewisse Zeitspanne keine Paketdaten übertragen werden. Solange jedoch keine Übertragung von der Mobilstation zur Basisstation erfolgt, sind Messungen der Basisstation bezüglich der Übertragungsverhältnisse von der Mobilstation nicht möglich. Zuvor berechnete Werte verlieren ihre Gültigkeit und müssen bei erneuter Zuweisung von physikalischen Kanälen neu bestimmt werden bzw. die Basisstation hat sicherzustellen, daß die Übertragungsverhältnisse derart eingestellt werden, daß in jedem Fall eine gesicherte Übertragung möglich ist. Letzteres führt beispielsweise zu einer überhöhten oder gar maximalen Sendeleistungseinstellung.

Der Erfindung liegt folglich die Aufgabe zugrunde, ein Verfahren und eine Basisstationssystem mit verbesserter Konfigurierung einer Luftschnittstelle für eine Paketdatenübertragung anzugeben. Diese Aufgabe wird durch das Verfahren mit den Merkmalen des Patentanspruchs 1 und durch das Basisstationssystem mit den Merkmalen des Patentanspruchs 10 gelöst. Vorteilhafte Weiterbildungen der Erfindung sind den Unteransprüchen zu entnehmen.

Erfindungsgemäß werden die Mobilstationen zusätzlich mit Kurzkennungen bezeichnet. Beim Verfahren zur Konfigurierung der Funkschnittstelle werden den Mobilstationen Zeitschlitze zur Signalisierung für die Aufwärtsrichtung zugewiesen. Die Zuweisung eines oder mehrerer Zeitschlitze zur Signalisierung für die Aufwärtsrichtung erfolgt nach einer vorgebbaren Sequenz, wobei die Zuweisung durch Indikatormeldungen erfolgt, die Kurzkennungen und Zeitschlitzbezeichnungen enthalten. Die Zuweisung ist somit unabhängig von einer Sequenz der Paketdatenübertragung von oder zu der Mobilstation.

Durch eine flexible Zuweisung eines Zeitschlitzes zur Signalisierung auch für Mobilstationen, denen momentan kein physikalischer Kanal zugewiesen ist, kann durch die Basisstation eine fortlaufende Messung zur Funkschnittstelle durchgeführt werden. Bei Wiederaufnahme der Paketdatenübertragung liegen somit sofort gültige Meßwerte zur Konfigurierung der Funkschnittstelle vor.

Gemäß einer weiteren vorteilhaften Ausgestaltung sind die Kurzkennungen der Mobilstationen zusätzlich zu ihren Bezeichnungen innerhalb des Mobilfunksystems für die Paketdatenübertragung gewählt. Die Kurzkennungen ermöglichen eine verbesserte Ressourcennutzung zwischen dem Netz und den Mobilstationen über die Funkschnittstelle, da sie unabhängig von im Netz bekannten Adressen für die Mobilstationen sind und die Signalisierung unabhängig von der Paketdatenübertragung entsprechend individueller Anforderungen flexibel gestalten.

Bei einem vorteilhaften Ausgestaltung des Verfahren zur Konfigurierung der Funkschnittstelle werden in einem Zeitschlitz zur Signalisierung Konfigurationsdaten bezüglich der Funkschnittstelle für mehrere Mobilstationen zusammengefaßt und übertragen. Eine solche Signalisierung ist für die Abwärtsrichtung von Bedeutung, da über ihn Informationen zur Konfigurierung der Funkschnittstelle für die Mobilstation, beispielsweise die Werte zur Sendeleistungseinstellung bzw. die Vorhaltzeit (Timing Advance) für den Sendezeitpunkt, enthalten sind. Da pro Mobilstation nur wenige Angaben benötigt werden spart ein Zusammenfassen der Konfigurationsdaten in einer Nachricht, Übertragungskapazität, die für Nachbarzellenmessungen oder anderweitige Signalisierungsinformationen nunmehr zur Verfügung steht.

Die Konfigurationsdaten für eine Mobilstation können zusammen mit den Konfigurationsdaten für andere Mobilstationen in einem einzigen Zeitschlitz zur Signalisierung in Abwärtsrichtung, in diesem Fall vorteilhafterweise in Wiederholung oder mit einer Kodierung bzw. Fehlererkennung versehen, oder mehreren nicht aufeinanderfolgenden Zeitschlitzen zur Signalisierung übertragen werden. Im letzteren Fall bringt die Verschachtelung einen Fehlerschutz. Welche Zeitschlitze zu einem solchen Signalisierungsblock zusammengefaßt werden kann eingestellt werden. Bei einer solchen Nutzung z.B. jedes zweiten Zeitschlitzes zur Signalisierung können die dazwischenliegenden Zeitschlitze zu Nachbarzellenmessungen genutzt werden.

Der Anteil der Zeitschlitze für die Nachbarzellenmessungen kann weiter erhöht werden, wenn weniger Konfigurationsdaten (beispielsweise nur die Vorhaltzeit) übertragen werden bzw. nur wenige Mobilstationen zu versorgen sind. Hierbei kann eine zyklische Anpassung der Sequenz des Zusammenfassens vorgesehen sein. Eine solche Anpassung schafft eine verbesserte Anpassung des Signalisierungsaufwandes an die tatsächlichen Bedürfnisse der Mobilstationen für eine Paketdatenübertragung.

Gemäß der Erfindung ist ein geschlossener Regelkreis für die Vorhaltzeit erreichbar, da Mobilstationen in Aufwärtsrichtung Zeitschlitze zur Signalisierung zugewiesen sind und in Abwärtsrichtung Signalisierungsblöcke für die Mobilstationen mit kurzer Verzögerungszeit eintreffen. An diesem Regelkreis sind vorteilhafterweise nur die Mobilstation und die Basisstation beteiligt. Da für diese Signalisierung im Gegensatz zur Paketdatenübertragung keine konkrete Zuordnung zwischen einer Mobilstation und einem Datenblock (wird üblicherweise in einem Basisstationscontroller durchgeführt) nötig ist, kann die Basisstation allein die Einstellung der Vorhaltzeit vornehmen. Hierbei entfällt Signalisierungsaufwand zwischen der Basisstation und dem Basisstationscontroller.

Die Konfiguration für die Vorhaltzeit und die Sendeleistungseinstellung erfolgt gemäß einer weiteren Ausgestaltung der Erfindung unabhängig voneinander. Die Vorhaltzeit wird nach einem geschlossenen Regelkreis zwischen Mobilstation und Basisstation bestimmt, wobei durch geeignete Auswahl der Zeitschlitze zur Signalisierung ein längerer Zyklus zwischen zwei Bestimmungen vorgesehen werden kann. Die Vorhaltzeit braucht angesichts der zur Signalausbreitungsgeschwindigkeit relativ langsamen Bewegung der Mobilstation nur im Abstand von einigen Sekunden bestimmt werden.

Bei der Bestimmung der Sendeleistungseinstellung der Basisstation wird die Sendeleistung vorteilhafterweise auf die Mobilstation mit den schlechtesten Übertragungsverbindungen auf dem gemeinsamen Kanal ausgerichtet. Dazu können unabhängig von einer Bestimmung der Vorhaltzeit offene oder geschlossene Regelkreise eingerichtet werden. Bei starken Unterschieden zwischen den für einzelne Mobilstationen benötigten Sendeleistungen und bei einem Vorhandensein von mehreren gemeinsamen Kanälen ist es vorteilhaft, die Mobilstationen entsprechend der benötigen Sendeleistung den Kanälen zuzuordnen.

Vorteilhafterweise erfolgt die Paketdatenübertragung in beide Übertragungsrichtungen, d.h. in Aufwärtsrichtung und Abwärtsrichtung, unabhängig voneinander. Eine Mobilstation kann folglich in Aufwärtsrichtung Daten senden oder in Abwärtsrichtung aus dem Netz Daten empfangen. Für eine Mobilstation kann auch eine Paketdatenübertragung in beide Richtungen vorgesehen sein. Die Trennung in Aufwärts- und Abwärtsrichtung ermöglicht eine große Flexibilität bei der Nutzung der funktechnischen Ressourcen und natürlich auch bei der Gestaltung der Mobilstationen, die gegebenenfalls nur senden oder empfangen.

Vorteilhafterweise wird von einer Mobilstation innerhalb eines Zeitschlitzes zur Signalisierung eine abgeschlossene Meldung an die Basisstation übermittelt. Diese abgeschlossene Meldung enthält beispielsweis Empfangswerte (RXLEV, RXQUAL) der Mobilstation für Signale der Basisstation, wodurch eine sofortige Sendeleistungseinstellung der Basisstation bei einer Paketdatenübertragung in Abwärtsrichtung möglich ist. Indem eine geschlossene Meldung pro Zeitschlitz übermittelt wird, verringert sich die Zeit bis zum Vorliegen des Empfangspegels der Mobilstation bei der Basisstation und die Zeit für die Konfigurierung der Funkschnittstelle. Die Basisstation bestimmt aus Aussendungen zur Signalisierung in Aufwärtsrichtung die Vorhaltzeit bzw. den Empfangspegel der Basisstationen in Bezug auf die jeweilige Mobilstation.

Der oder die bestimmten Werte bzw. Regelwerte für die Vorhaltzeit und die Sendeleistung werden der Mobilstation in Abwärtsrichtung übermittelt, worauf auch diese die notwendigen Einstellungen zur Konfigurierung der Funkschnittstelle vornehmen kann.

Die Konfigurierung wird weiter beschleunigt, wenn die Bestimmung der Vorhaltzeit und/oder des Empfangspegels der Basisstation zusätzlich aus den Zeitschlitzen zur Paketdatenübertragung vorgenommen wird. Auch durch die Zuweisung von Kurzkennungen zu Mobilstationen kann die Einstellzeit der Konfiguration beeinflußt werden. Werden beispielsweise einer Mobilstation mehrere Kurzkennungen zugewiesen, wird die Einstellzeit verkürzt. Ebenso ist es möglich, durch entsprechende Auswahl bestimmter Kurzkennungen zum Ende eines Makrorahmens, die verzögerungszeiten klein zu halten. Auch die Beschränkung der Anzahl der Kurzkennungen führt zu einer schnelleren Wiederbenutzbarkeit eines Zeitschlitzes zur Signalisierung für eine Mobilstation und zu einer Verkürzung der Verzögerungszeit. Die Anzahl der Kurzkennungen wird vorteilhafterweise entsprechend den Übertragungsverhältnissen und der Anzahl für den Paketdatendienst vorgesehenen Mobilstationen eingestellt.

Werden mehrere Zeitschlitze zur Signalisierung in Abwärtsrichtung zu einem Signalisierungsblock zusammengefaßt, dann erfolgt vorteilhafterweise die Signalsierung gleichzeitig für mehrere Mobilstationen. Die Signalisierung in Abwärtsrichtung kann jedoch ebenfalls innerhalb von Paketdaten erfolgen, so daß beispielsweise die Sendeleistungseinstellung kontinuierlich, ohne Nutzung von Zeitschlitzen zur Signalisierung angepaßt werden kann, und zusätzliche Zeitschlitze zur Nachbarzellenausmessung zur Verfügung stehen.

Auch durch die Wahl von bestimmten Sendeblocktypen kann der Signalisierungsaufwand gesenkt werden. Werden im Gegensatz zu sogenannten Access Burst, normale Sendeblöcke (normal bursts) verwendet, ist eine Empfangsleistungsbestimmung durch Mittelung über eine größere Anzahl von Bits möglich, wodurch die Meßgenauigkeit steigt bzw. eine geringere Anzahl von wiederholten Meßwerten zur Sendeleistungseinstellung benötigt wird. Solche längeren Sendeblöcke werden vorteilhafterweise zur Sendeleistungseinstellung verwendet, wenn bereits gültige Werte für die Vorhaltzeit vorliegen.

Die Erfindung wird nachfolgend bezugnehmend auf zeichnerische Darstellungen anhand von Ausführungsbeispielen näher erläutert.

Dabei zeigen
- FIG 1: ein Blockschaltbild eines Zeitmultiplex-Mobilfunksystems zur Paketdatenübertragung,
- FIG 2: einen Frequenzkanal mit Zeitmultiplex,
- FIG 3: die Zeitschlitze eines Kanals für eine Paketdatenübertragung, und
Tabelle 1, 2 und 3 die Benutzung von Zeitschlitzen zur Signalisierung.

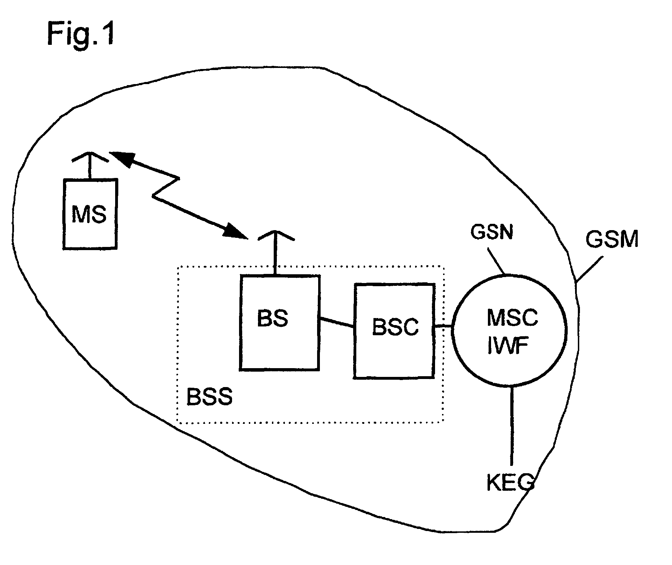

Das Zeitmultiplex-Mobilfunksystem nach FIG 1 ist beispielsweise ein GSM-Mobilfunknetz GSM, das zumindest ein Basisstationssystem BSS mit einer Steuereinrichtung BSC und einer Basisstation BS enthält. Im Funkbereich der einen dargestellten Basisstation BS befinden sich Mobilstationen MS. Das Basisstationssystem BSS stellt die Verbindung zu weiteren Einrichtungen des GSM-Mobilfunknetzes GSM her.

Diese weiteren Einrichtungen sind z.B. eine Mobilvermittlungsstelle MSC und eine Einheit zur Realisierung von Interworking-Funktionen IWF. Das Zusammenwirken von Mobilvermittlungsstelle MSC und Interworking-Funktionen IWF ergibt eine Paketvermittlungsstelle, die auch als GSN (GPRS support node bezeichnet wird. Diese Paketvermittlungsstelle ist an eine MSC zur Sprachvermittelung angeschlossen, alternativ könnte sie als abgesetzte eigene Einheit realisiert werden.

Das GSM-Mobilfunknetz GSM kann mit weiteren Kommunikationsnetzen verbunden sein. Beispielhaft ist ein weiteres Kommunikationsendgerät KEG mit dem GSM-Mobilfunknetz verbindbar oder selbst Bestandteil dieses GSM-Mobilfunknetzes GSM.

Das GSM-Mobilfunknetz GSM soll zur Paketdatenübertragung parallel zur bekannten Sprachübertragung genutzt werden. Dabei kann die Einrichtung zur Realisierung von Interworking-Funktionen IWF die Kopplung des GSM-Mobilfunknetzes GSM mit Datenübertragungsnetzen und damit zum weiteren Kommunikationsendgerät KEG herstellen.

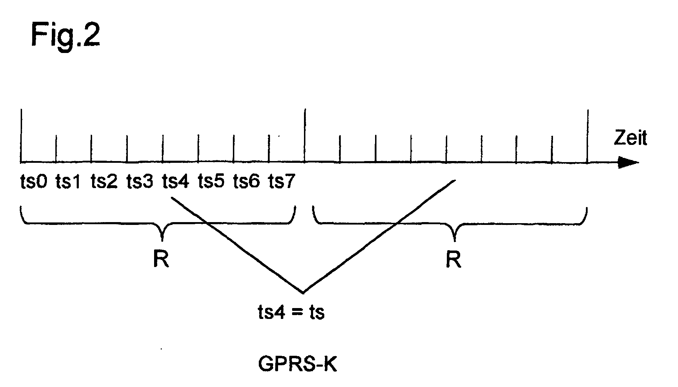

Die Funkschnittstelle zwischen den Mobilstationen MS und einer Basisstation BS ist durch eine Frequenz und zumindest einen Zeitschlitz ts charakterisiert. Nach FIG 2 werden beispielsweise acht Zeitschlitze ts (ts0 bis ts7) zu einem Rahmen R zusammengefaßt. Der Rahmen R, wiederholt sich zyklisch, wobei zu einem Kanal ein wiederkehrender Zeitschlitz beispielsweise der Zeitschlitz ts = ts4 gehört. Dieser Zeitschlitz ts wird im folgenden als Kanal GPRS-K für die Paketdatenübertragung im Sinne des Dienstes GPRS (General Paket Radio Services) verwendet.

Soll eine Mobilstation MS diesen Dienst nutzen, dann führt sie entsprechend der GSM-Terminologie einen willkürlichen Zugriff (Random Access) mit einem kurzen sogenannten access burst durch und wechselt auf einen dedizierten Kontrollkanal. Es folgt eine Authentifikation und das Setzen des Kontexts bezüglich einer logischen Verbindung (standby state). Soll das weitere Kommunikationsendgerät KEG über den Paketdatendienst mit einer Mobilstation MS kommunizieren, erfolgt netzseitig ein Anruf (Paging) sowie der geschilderte willkürliche Zugriff.

Für den Fall, daß die Mobilstation MS Datenpakete senden oder empfangen soll (ready state), findet beim Bestehen einer logischen Verbindung ein weiterer willkürlicher Zugriff statt. Hierbei wird der Mobilstation MS auch eine Kurzkennung id und der entsprechende GPRS-Kanal GPRS-K zugewiesen. Worauf netzseitig die Vorhaltzeit (Timing Advance) ta und die Empfangspegel pb in der Basisstation BS bestimmt werden. Daraufhin werden der Mobilstation MS vier aufeinanderfolgende Zeitschlitze T als ein Paketdatenblock TCH in Aufwärtsrichtung zugewiesen. Gegebenenfalls wird zusätzlich eine Angabe zur Sendeleistungskontrolle übertragen.

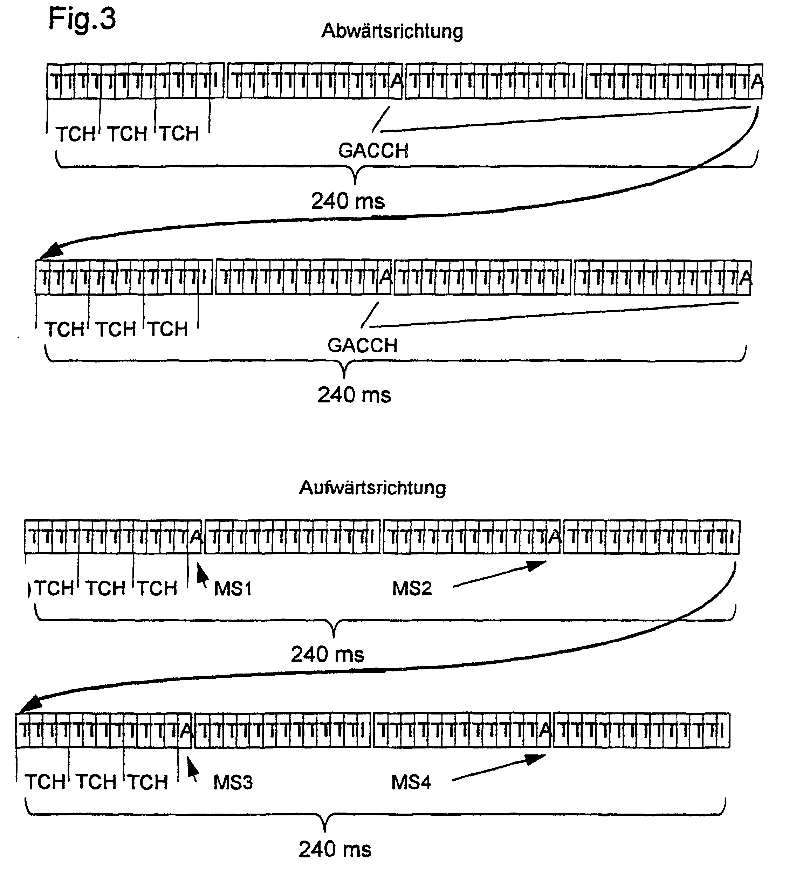

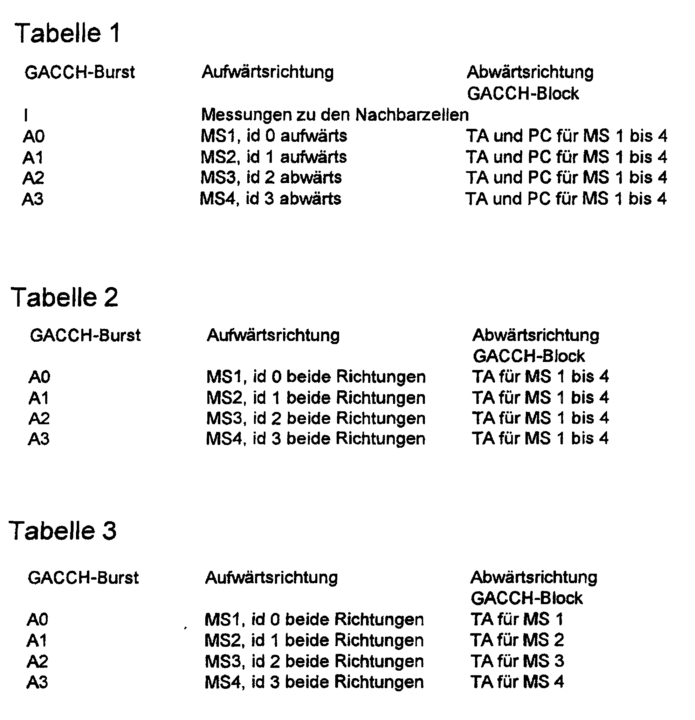

Die Paketdatenübertragung und die zugehörige Signalisierung soll nun anhand von FIG 3 und der Tabellen 1 und 2 gezeigt werden.

Es werden jeweils vier Zeitschlitze T zur Paketdatenübertragung zu einem Paketdatenblock TCH zusammengefaßt. Drei solche Paketdatenblöcke TCH und ein Zeitschlitz A,I zur Signalisierung wiederholen sich viermal zu einem Makrorahmen, der 52 Rahmen R umfaßt. Dies gilt sowohl für die Aufwärtsals auch für die Abwärtsrichtung. Weiterhin bilden zwei solcher Makrorahmen wiederum einen Rahmen höherer Ordnung. Ein Makrorahmen dauert 240 ms.

Die Informationen eines Paketdatenblockes TCH mit vier Zeitschlitzen T sind verschachtelt. Die Zuweisung von Paketdatenblöcken TCH zu verschiedenen Mobilstationen MS erfolgt in Aufwärts- und Abwärtsrichtung flexibel auf eine oder mehrere Mobilstationen MS. Damit können verschiedene Datenraten realisiert werden. Zwischen den Mobilstationen MS kann über den Zugriff auf den GPRS-Kanal anhand von Priorisierungen entschieden werden. Im folgenden werden Aufwärtsrichtung und Abwärtsrichtung getrennt betrachtet, wobei eine Mobilstation MS durchaus in beide Richtungen kommunizieren kann. Die Zuordnung von Paketdatenblöcken TCH während des Bestehens einer logischen Verbindung erfolgt im Band, d.h. innerhalb der Paketdatenblöcke TCH werden den Mobilstationen MS durch Indikatormeldungen angezeigt, wer folgende Paketdatenblöcke TCH nutzen kann.

In Abwärtsrichtung werden nicht nur vier aufeinanderfolgende Zeitschlitze T zur Paketdatenübertragung verschachtelt, sondern es findet auch eine Verschachtelung der Signalisierungsinformationen statt, die einen Signalisierungsblock GACCH bilden. Dabei wird gemäß Fig. 3 jeder zweite Zeitschlitz A zur Signalisierung zum Signalisierungsblock GACCH zusammengefaßt, währenddessen dazwischenliegende Zeitschlitze I zu Messungen der Mobilstationen MS in Nachbarzellen verwendet werden. Die Abfolge von Zeitschlitzen A,I zur Signalisierung und Nachbarkanalmessung kann auch einer anderen Sequenz, beispielsweise A/I = 1/3 folgen. Ein Umschalten der Sequenzen wird nach den Übertragungsbedinungen von der Basisstation BS vorgenommen.

Die Nachbarzellenmessungen dienen der Ermittelung von Basisstationen BS, die bei einer Verschlechterung der Übertragungsbedingungen auf dem momentan zugewiesenen Kanal ausgewählt werden können. In der Mobilstation liegt durch diese Messungen eine Prioritätsliste vor.

Ein Signalisierungsblock GACCH beinhaltet dabei Informationen für mehrere Mobilstationen MS, siehe dazu Tabelle 1 und Tabelle 2. Alternativ - Tabelle 3 - ist es möglich die Anzahl der Zeitschlitze pro Signalisierungsblock GACCH zu verringern und zusätzlich oder alternativ zu einer Verschachtelung die Konfigurationsdaten (Vorhaltzeit TA und/oder Sendeleistungseinstellung PC) in einem Zeitschlitz mehrfach zu übertragen bzw. sie mit einem weiteren Schutz zu versehen, z.B. durch eine Kodierung.

Besonders vorteilhaft ist das erfindungsgemäße Verfahren, wenn lediglich eine Vorhaltzeitbestimmung vorgenommen wird und diese wie nachstehend geschildert signalisiert wird. Die Sendeleistungsermittlung erfolgt davon unabhängig. Durch eine solche Trennung der Ermittelung beider Konfigurationsdaten TA, PC entsteht ein höhere Flexibilität bei der Konfigurierung der Funkschnittstelle. Zur Vereinfachung wird jedoch im folgenden von einem gleichartigen Regelkreis bei der Bestimmung von Vorhaltzeit TA und Sendeleistungseinstellung PC ausgegangen.

Beispielsweise enthält der GACCH-Block die Werte für die Vorhaltzeit TA und die Sendeleistungseinstellung PC (z.B. Empfangspegel pb der Basisstation BS oder die geforderte Sendeleistung) für die Mobilstationen 1 bis 4. In diesem Fall beträgt also die Dauer bis zur Wiederholung der Vorhaltzeit TA und der Sendeleistungswerte PC 480 ms. Erfolgt eine Signalisierung nur für zwei Mobilstationen, beispielsweise zwei Mobilstationen, die in Aufwärtsrichtung senden, kann die Anzahl der Kurzkennungen id auf zwei reduziert werden und die Verzögerungszeit beträgt nunmehr 240 ms.

In Aufwärtsrichtung erfolgt die Zuordnung der Zeitschlitze A zur Signalisierung folgendermaßen. Nach Tabelle 1 erfolgt die Zuweisung der Zeitschlitze A0 bis A1 für die Mobilstationen 1 bis 2 in Aufwärtsrichtung (Kurzkennungen id 0 bis 1) und die Zeitschlitze A2 bis A3 für die Mobilstationen MS 2 bis MS3 in Abwärtsrichtung (Kurzkennungen id 2 bis 3). Kommunizieren die Mobilstationen MS sowohl in Aufwärts- als auch in Abwärtsrichtung, dann erfolgt die Zuweisung der Zeitschlitze A zur Signalisierung gemäß Tabelle 2.

Bei der Zuweisung nach Tabelle 1, also der getrennten Betrachtung von Aufwärtsrichtung und Abwärtsrichtung sendet jede Mobilstation MS in dem ihr zugeordneten Zeitschlitz A zur Signalisierung einen speziell kodierten access burst an die Basisstation BS. Darin signalisiert sie, mit welcher Feldstärke und Qualität (RXLEV, RXQUAL) die Signalisierungsblöcke GACCH der Basisstation BS in Abwärtsrichtung empfangen wurden. Die Basisstation BS mißt die Aussendungen (zugewiesene Zeitschlitze A zur Signalisierung) der Mobilstation MS aus, um eine Vorhaltzeit TA und eine Sendeleistung bzw. die Sendeleistungsänderung PC der Mobilstation MS zu bestimmen und ihr zu signalisieren. Damit erhält die Mobilstation MS Werte, die sie benutzt wenn Paketdatenblöcke TCH in Aufwärtsrichtung gesendet werden.

Die von der Mobilstation MS gemeldeten Empfangspegel pm benutzt die Basisstation BS dazu, eine angemessene Sendeleistung einzustellen, wenn nachfolgend Paketdatenblöcke TCH für die Datenübertragung in Abwärtsrichtung an die Mobilstation MS gesendet werden. Für die Aktualität der Vorhaltzeiten TA und Sendeleistungswerte in Aufwärtsrichtung ergeben sich folgende Verzögerungszeiten: Die Mobilstation MS erhält im Abstand von 480 ms neue Werte. Bei der Sequenz der Zeitschlitze I, A wird darauf geachtet, daß die Zeit zwischen Signalisierung in Aufwärtsrichtung durch eine Mobilstation MS und ein für diese Mobilstation MS vorgesehenen Übertragung in Abwärtsrichtung gering ist.

Nach Tabelle 3 wurde die Signalisierung in Abwärtsrichtung dahingehend ausgestaltet, daß jeder Mobilstation 1 bis 4 ein individueller Zeitschitz A zur Signalisierung zugewiesen wurde, in dem die Vorhaltzeit TA mit einer zusätzlichen Fehlersicherung übertragen wird. Je weniger Mobilstationen den gemeinsamen Kanal GPRS-K nutzen, um so weniger solche Zeitschlitze A zur Signalisierung werden benötigt und um so mehr Zeitschlitze I stehen zu Nachbarzellenmessungen, zur zusätzlichen Signalisierung (z.B. Verbindung auflösen, Frequenzwechsel) oder auch einer zusätzlichen Datenübertragung zur Verfügung.

Die Ausführungsbeispiele können dahingehend modifiziert werden, daß Kurzkennungen id derart verwendet werden, daß mit Vorzug die Kurzkennungen id 1 bzw. 3 benutzt werden. In diesem Falle ergeben sich Verzögerungszeiten nahe dem günstigsten Fall von 240 ms. Auch bei einer doppelten Verwendung von Kurzkennungen id verringert sich der Abstand zwischen dem Eintreffen neuer Werte. Wird die Zahl der Kurzkennungen weiter beschränkt, dann verkürzt sich auch die Verzögerungszeit. Sind für längere Zeiten nicht aktualisierte Werte akzeptabel, so kann die Anzahl der Kurzkennungen id auch in Viererschritten auf 8, 12, 16 usw. erhöht werden.

Die Vergabe der Kurzkennungen id wird insbesondere den Übertragungsbedingungen, d.h. der zuvor registrierten Veränderungen von Vorhaltzeit TA und Sendeleistungsänderungen angepaßt. Ebenso wird berücksichtigt, wieviele Mobilstationen MS die Paketdatenübertragung über den GPRS-Kanal GPRS-K nutzen wollen.

Durch die feste Zuordnung von Zeitschlitzen A zur Signalisierung in Aufwärtsrichtung ist die Basisstation BS ständig über die aktuellen Übertragungsverhältnisse der Funkschnittstelle informiert und kann entsprechende Konfigurierung der Funkschnittstelle vornehmen. Für Mobilstationen MS, die derartig in Aufwärtsrichtung signalisieren und denen in Abwärtsrichtung über die Signalisierungsblöcke GACCH die Werte zur Vorhaltzeit TA und zur Sendeleistungseinstellung PC übermittelt werden, existiert ein geschlossener Regelkreis.
Der Regelkreis ist auch dann möglich, wenn die Mobilstation MS momentan keine Paketdaten sendet oder empfängt.

Falls jedoch der Mobilstation MS auch Paketdatenblöcke TCH in Aufwärts- oder Abwärtsrichtung zugewiesen sind, können auch dafür Werte für die Vorhaltzeit TA oder den Empfangspegel pb, pb zusätzlich berechnet und übermittelt werden.

Insbesondere eignet sich das paketorientierte Übertragen von Informationen über die Funkschnittstelle für Telematikapplikationen, Fax und Dateiübertragung, Point of Sales Realsierungen, Flottenmanagement und Verkehrsleitsysteme.

## Patentansprüche

1. Verfahren zur Konfigurierung einer Funkschnittstelle zwischen einer Mobilstation (MS) und einer Basisstation (BS) eines Zeitmultiplex-Mobilfunksystems für eine Paketdatenübertragung, wobei
- die Übertragung von einer Mobilstation (MS) zur Basisstation (BS) als Aufwärtsrichtung und von der Basisstation (BS) zu einer Mobilstation (MS) als Abwärtsrichtung bezeichnet wird,
- ein Kanal (GPRS-K) durch zumindest einen Zeitschlitz (ts, T, A) pro Zeitmultiplex-Rahmen (R) gebildet wird,
- die Paketdatenübertragung mehrerer Mobilstationen (MS) über den Kanal (GPRS-K) erfolgt, wobei jede Mobilstation (MS) mit einer Kennung bezeichnet ist,
- im Kanal (GPRS-K) in zyklischen Abständen ein Zeitschlitz (ts, A, I) zur Signalisierung vorgesehen ist,
**dadurch gekennzeichnet, daß**
- die Mobilstationen (MS) für die Paketdatenübertragung zusätzlich mit im Kanal (GPRS-K) eindeutigen Kurzkennungen (id) bezeichnet werden,
- durch die Basisstation (BS) der Mobilstation (MS) nach einer vorgebbaren Sequenz ein oder mehrere Zeitschlitze (ts, A) zur Signalisierung für die Aufwärtsrichtung in einem Zyklus mit allen Zeitschlitzen (ts, A) zur Signalisierung exklusiv zugewiesen werden,
- wobei die exklusive Zuweisung von einem oder mehreren Zeitschlitzen (ts, A) zur Signalisierung für die Aufwärtsrichtung durch Indikatormeldungen erfolgt, die Kurzkennungen (id) und Zeitschlitzbezeichnungen enthalten, und
- wobei die Zuweisung unabhängig von der Paketdatenübertragung von oder zu der Mobilstation (MS) ist.

2. Verfahren nach Anspruch 1,
bei dem einer Mobilstation (MS) ein oder mehrere Kurzkennungen (id) entsprechend der Übertragungenverhältnisse zugewiesen werden.

3. Verfahren nach einem der vorherigen Ansprüche,
bei dem die Anzahl der Kurzkennungen (id) für einen Kanal entsprechend der Übertragungenverhältnisse einstellbar ist.

4. Verfahren nach einem der vorherigen Ansprüche,
bei dem die Anzahl der Kurzkennungen (id) für einen Kanal auf kleiner gleich 4 beschränkt wird.

5. Verfahren nach einem der vorherigen Ansprüche,
bei dem mehrere Zeitschlitze (ts, A) zur Signalisierung zu einem Signalisierungsblock (GACCH) zusammengefaßt werden.

6. Verfahren nach Anspruch 5,
bei dem das Zusammenfassen der Zeitschlitze (ts, A) zur Signalisierung nach einer vorgebbaren Sequenz erfolgt, wobei verbleibende Zeitschlitze (I) für eine Nachbarzellenmessung der Mobilstationen (MS) vorgesehen sind.

7. Verfahren einem der vorhergehenden Ansprüche,
bei dem Informationen in Zeitschlitzen (ts, A) zur Signalisierung mit einer zusätzlichen Kodierung versehen werden und/oder mehrfach in den Zeitschlitzen (ts, A) enthalten sind.

8. Verfahren nach einem der vorhergehenden Ansprüche,
bei dem die Paketdatenübertragung in beide Übertragungsrichtungen unabhängig voneinander erfolgt.

9. Verfahren nach einem der vorhergehenden Ansprüche,
bei dem die Konfiguration der Funkschnittstelle durch die Basisstation (BS) ohne Steuerung durch einen Basisstationscontroller (BSC) erfolgt.

10. Basisstationssystem (BSS) zur Konfigurierung einer Funkschnittstelle zwischen einer Mobilstation (MS) und einer Basisstation (BS) eines Zeitmultiplex-Mobilfunksystems für eine Paketdatenübertragung, wobei
- die Übertragung von einer Mobilstation (MS) zur Basisstation (BS) als Aufwärtsrichtung und von der Basisstation (BS) zu einer Mobilstation (MS) als Abwärtsrichtung bezeichnet wird,
- ein gemeinsamen Kanal (GPRS-K) durch zumindest einen Zeitschlitz (ts, T, A) pro Zeitmultiplex-Rahmen (R) gebildet wird,
- die Paketdatenübertragung mehrerer Mobilstationen (MS) über den gemeinsamen Kanal (GPRS-K) erfolgt, wobei jede Mobilstation (MS) mit einer Kennung bezeichnet ist,
- im Kanal (GPRS-K) in zyklischen Abständen ein Zeitschlitz (ts, A) zur Signalisierung vorgesehen ist,
mit einer Steuereinrichtung (BSC) zur Zuweisung von Zeitschlitzen (ts, A) an die Mobilstation (MS),
**dadurch gekennzeichnet, daß**
die Steuereinrichtung (BSC) derart ausgestaltet ist, daß
- die Mobilstationen (MS) für die Paketdatenübertragung zusätzlich mit im Kanal (GPRS-K) eindeutigen Kurzkennungen (id) bezeichnet werden,
- durch die Basisstation (BS) der Mobilstation (MS) nach einer vorgebbaren Sequenz ein oder mehrere Zeitschlitze (ts, A) zur Signalisierung für die Aufwärtsrichtung in einem Zyklus mit allen Zeitschlitzen (ts, A) zur Signalisierung exklusiv zugewiesen werden,
- wobei die exklusive Zuweisung von einem oder mehreren Zeitschlitzen (ts, A) zur Signalisierung für die Aufwärtsrichtung durch Indikatormeldungen erfolgt, die Kurzkennungen (id) und Zeitschlitzbezeichnungen enthalten, und
- wobei die Zuweisung unabhängig von der Paketdatenübertragung von oder zu der Mobilstation (MS) ist.

## Claims

1. Method for configuration of a radio interface between a mobile station (MS) and a base station (BS) of a time-division multiplex mobile radio system for packet data transmission, wherein
- the transmission from a mobile station (MS) to the base station (BS) is called the uplink direction, and from the base station (BS) to a mobile station (MS) is called the downlink direction,
- a channel (GPRS-K) is formed by at least one time slot (ts, T, A) per time-division multiplex frame (R),
- the packet data transmission from a plurality of mobile stations (MS) takes place via the channel (GPRS-K), each mobile station (MS) being designated by an identifier,
- a time slot (ts, A, I) for signalling is provided at cyclic intervals in the channel (GPRS-K),
**characterized in that**
- for packet data transmission, the mobile stations (MS) are additionally designated by brief identifiers (id) which are unique in the channel (GPRS-K),
- after a sequence which can be predetermined, the base station (BS) allocates exclusively to the mobile station (MS) one or more time slots (ts, A) for signalling for the uplink direction in a cycle with all the time slots (ts, A) for signalling,
- with the exclusive allocation of one or more time slots (ts, A) for signalling for the uplink direction being carried out by means of indicator messages, which contain short identifiers (id) and time slot designations, and
- with the allocation being independent of the packet data transmission from or to the mobile station (MS).

2. Method according to Claim 1,
in which a mobile station (MS) is allocated one or more short identifiers (id) on the basis of the transmission conditions.

3. Method according to one of the preceding claims,
in which the number of short identifiers (id) for a channel can be set depending on the transmission conditions.

4. Method according to one of the preceding claims,
in which the number of short identifiers (id) for one channel is restricted to not more than 4.

5. Method according to one of the preceding claims,
in which a plurality of time slots (ts, A) for signalling are combined to form a signalling block (GACCH).

6. Method according to Claim 5,
in which the time slots (ts, A) for signalling are combined in accordance with a sequence which can be predetermined, remaining time slots (I) being provided for an adjacent cell measurement of the mobile station (MS).

7. Method according to one of the preceding claims, in which information in time slots (ts, A) for signalling is provided with additional coding and/or is included in the time slots (ts, A) more than once.

8. Method according to one of the preceding claims,
in which the packet data transmission takes place in both transmission directions independently of one another.

9. Method according to one of the preceding claims,
in which the configuration of the radio interface takes place by the base station (BS) without being controlled by a base station controller (BSC).

10. Base station system (BSS) for configuration of a radio interface between a mobile station (MS) and a base station (BS) of a time-division multiplex mobile radio system for packet data transmission, wherein
- the transmission from a mobile station (MS) to the base station (BS) is called the uplink direction, and from the base station (BS) to a mobile station (MS) is called the downlink direction,
- a common channel (GPRS-K) is formed by at least one time slot (ts, T, A) per time-division multiplex frame (R),
- the packet data transmission from a plurality of mobile stations (MS) takes place via the common channel (GPRS-K), each mobile station (MS) being designated by an identifier,
- a time slot (ts, A) for signalling is provided at cyclic intervals in the channel (GPRS-K),
having a control device (BSC) for allocating time slots (ts, A) to the mobile station (MS)
**characterized in that**
the control device (BSC) is configured in such a manner that
- for packet transmission, the mobile stations (MS) are additionally designated by brief identifiers (id) which are unique in the channel (GPRS-K),
- after a sequence which can be predetermined the base station (BS) allocates exclusively to the mobile station (MS) one or more time slots (ts, A) for signalling for the uplink direction in a cycle with all the time slots (ts, A), for signalling
- with the exclusive allocation of one or more time slots (ts, A) for signalling for the uplink direction being carried out by means of indicator messages, which contain short identifiers (id) and time slot designations, and
- with the allocation being independent of the packet data transmission from or to the mobile station (MS).

## Revendications

1. Procédé pour la configuration d'une interface radio entre un poste mobile (MS) et un poste de base (BS) d'un système de radiotéléphonie mobile à multiplexage dans le temps pour une transmission de données par paquets, dans lequel :
- la transmission depuis un poste mobile (MS) jusqu'au poste de base (BS) est appelée sens montant et depuis le poste de base (BS) jusqu'à un poste mobile (MS) sens descendant,
- un canal (GPRS-K) est formé par au moins une fenêtre temporelle (ts, T, A) pour chaque trame (R) de multiplexage dans le temps,
- la transmission de données par paquets depuis plusieurs postes mobiles (MS) s'effectue par le canal (GPRS-K), chaque poste mobile (MS) étant désigné par une identification,
- une fenêtre temporelle (ts, A, I) de signalisation est prévue à intervalles cycliques dans le canal (GPRS-K),
**caractérisé en ce que**
- pour la transmission de données par paquets, les postes mobiles (MS) sont de plus désignés par de courtes identifications univoques (id) dans le canal (GPRS),
- une ou plusieurs fenêtres temporelles (ts, A) de signalisation dans le sens montant sont attribuées exclusivement par le poste de base (BS) au poste mobile (MS) suivant une séquence prédéterminable, dans un cycle reprenant toutes les fenêtres temporelles (ts, A) de signalisation,
- l'attribution exclusive d'une ou de plusieurs fenêtres temporelles (ts, A) de signalisation dans le sens montant s'effectue par des messages d'indication qui contiennent les courtes identifications (id) et des désignations des fenêtres temporelles, et
- l'attribution est indépendante de la transmission de données par paquets depuis ou vers le poste mobile (MS).

2. Procédé selon la revendication 1, dans lequel une ou plusieurs courtes identifications (id) sont attribuées à un poste mobile (MS) en fonction des conditions de transmission.

3. Procédé selon l'une des revendications précédentes dans lequel le nombre des courtes identifications (id) peut être réglé pour un canal en fonction des conditions de transmission.

4. Procédé selon l'une des revendications précédentes, dans lequel le nombre des courtes identifications (id) dans un canal est limité à un nombre inférieur ou égal à 4.

5. Procédé selon l'une des revendications précédentes dans lequel plusieurs fenêtres temporelles (ts, A) de signalisation sont rassemblées en un bloc de signalisation (GACCH).

6. Procédé selon la revendication 5, dans lequel le rassemblement des fenêtres temporelles (ts, A) de signalisation s'effectue selon une séquence prédéterminable, des fenêtres temporelles (I) restantes étant prévues pour une mesure des cellules voisines des postes mobiles (MS).

7. Procédé selon l'une des revendications précédentes, dans lequel des informations présentes dans les fenêtres temporelles (ts, A) de signalisation sont dotées d'un codage supplémentaire et/ou sont contenues plusieurs fois dans les fenêtres temporelles (ts, A).

8. Procédé selon l'une des revendications précédentes, dans lequel les transmissions des données par paquets dans les deux sens de transmission s'effectuent indépendamment l'une de l'autre.

9. Procédé selon l'une des revendications précédentes dans lequel la configuration de l'interface radio s'effectue par le poste de base (BS) sans commande par un contrôleur de poste de base (BSC).

10. Système de poste de base (BSS) pour la configuration d'une interface radio entre un poste mobile (MS) et un poste de base (BS) d'un système de radiotéléphonie mobile à multiplexage dans le temps pour une transmission de données par paquets, dans lequel :
- la transmission depuis un poste mobile (MS) jusqu'au poste de base (BS) est appelée sens montant et depuis le poste de base (BS) jusqu'à un poste mobile (MS) sens descendant,
- un canal (GPRS-K) commun est formé par au moins une fenêtre temporelle (ts, T, A) pour chaque trame (R) de multiplexage dans le temps,
- la transmission de données par paquets depuis plusieurs postes mobiles (MS) s'effectue par le canal (GPRS-K) commun, chaque poste mobile (MS) étant désigné par une identification,
- une fenêtre temporelle (ts, A) de signalisation est prévue à intervalles cycliques dans le canal (GPRS-K),
avec un dispositif de commande (BSC) pour l'attribution de fenêtres temporelles (ts, A) au poste mobile (MS), **caractérisé en ce que**
le dispositif de commande (BSC) est configuré de telle sorte que
- pour la transmission de données par paquets, les postes mobiles (MS) sont de plus désignés par de courtes identifications univoques (id) dans le canal (GPRS-K),
- une ou plusieurs fenêtres temporelles (ts, A) de signalisation dans le sens montant sont attribuées exclusivement par le poste de base (BS) au poste mobile (MS) suivant une séquence prédéterminable, dans un cycle reprenant toutes les fenêtres temporelles (ts, A) de signalisation,
- l'attribution exclusive d'une ou de plusieurs fenêtres temporelles (ts, A) de signalisation dans le sens montant s'effectue par des messages d'indication qui contiennent les courtes identifications (id) et des désignations des fenêtres temporelles, et
- l'attribution est indépendante de la transmission de données par paquets depuis ou vers le poste mobile (MS).
